# EUROPEAN PATENT APPLICATION

(11) **EP 4 521 496 A1**
(43) Date of publication of application: **12.03.2025**
(21) Application number: 23195599.8
(22) Date of filing: 06.09.2023
(51) Int. Cl.: H01M 8/04089, B64D 37/32, F16L 9/18, F16L 11/20, F16L 57/04, H01M 8/04082

(54) **FUEL CELL SYSTEM WITH INERT GAS SEPARATOR AND AIRCRAFT HAVING A FUEL CELL SYSTEM**

(71) Applicant: Airbus Operations GmbH, 21129 Hamburg (DE)
(72) Inventor: Osso, Charifan, 21129 Hamburg (DE)

(57) **Abstract**

The present disclosure relates to a fuel cell system (100) comprising a fuel cell (110), a fuel tank (130), a fuel distribution pipe (135) fluidly connecting the fuel tank (130) with a fuel inlet (116) of the fuel cell (110). The fuel distribution pipe (135) has an inner pipe (136) and an outer pipe (137), the latter of which receives a stream of inert gas from an inert gas separator (120) that is fluidly connected to a gas outlet (115) of the fuel cell (110).

## Description

The present disclosure generally relates to a fuel cell system having an inert gas separator and an aircraft comprising such fuel cell system. Particularly, the present disclosure relates to a fuel cell system, wherein a fuel distribution has a double-walled pipe with an inner pipe conducting fuel and an outer pipe conducting an inert gas from an inert gas separator coupled to a gas outlet of the fuel cell. Furthermore, an aircraft having such fuel cell system is also disclosed.

A conventional fuel cell system comprises a hydrogen distribution, such as one or more pipes conducting hydrogen. Since hydrogen may leak or permeate from the hydrogen distribution, venting of the hydrogen distribution is required. Some systems provide a shrouded pipe, in order to collect any leaked or permeated hydrogen. The shrouded pipe can be filled with nitrogen, in order to avoid the presence of oxygen. Otherwise, accumulation of hydrogen may increase the risk of an explosive mixture and/or an uncontrolled burning of the hydrogen.

However, a sensor system in the shrouded pipe is required, in order to detect a hydrogen level in the shroud. Once a certain hydrogen level is reached, the shrouded pipe has to be vented and refilled with nitrogen. This requires manual work and a downtime for the fuel cell.

It is therefore an object of the present disclosure to provide an improved fuel cell system, particularly a more secure fuel cell system, while maintaining an efficient output of the fuel cell system's.

This object is solved by the present invention as defined in the independent claims. Preferred embodiments are defined by the dependent claims.

According to a first aspect to better understand the present disclosure, a fuel cell system comprises a fuel cell, a fuel tank, a double-walled fuel distribution pipe having an inner pipe fluidly connecting the fuel tank with a fuel inlet of the fuel cell, and an outer pipe surrounding at least a portion of the inner pipe. Thus, the outer pipe encases the inner (fuel) pipe. For instance, the fuel distribution pipe forms a shrouded pipe for fuel distribution and allows catching or collecting hydrogen leaking or permeating from the inner pipe.

It is to be understood that the fuel cell system may comprise more than one fuel tank and/or more than one fuel cell, so that more than one double-walled fuel distribution pipe can be present in the system, together forming a fuel distribution. This includes more than one fuel cell being arranged at an end of the double-walled fuel distribution pipe, wherein the fuel distribution pipe comprises branches conducting fuel to each fuel cell. Any portion of the fuel distribution or the entire fuel distribution (all fuel distribution pipes) can be equipped with such outer pipe (shroud).

Furthermore, the fuel cell system comprises an inert gas separator fluidly connected to a gas outlet of the fuel cell, and configured to separate nitrogen from a gas exiting the fuel cell. Such inert gas separator can be any system receiving a gas, such as an air stream, and separating nitrogen from the received gas.

The fuel cell system also comprises an inert gas pipe conducting the nitrogen into the outer pipe. Thus, the fuel distribution pipe, i.e. the inner pipe, is surrounded by nitrogen. In other words, a shrouded pipe for fuel distribution is formed that surrounds the actual fuel pipe with an inert gas containing less or no oxygen. Any fuel, such as hydrogen, methane or other fuel for a fuel cell, leaking or permeating from the fuel distribution pipe will not come into contact with oxygen. Therefore, the risk of having a critical mixture of fuel and oxygen (eventually leading to burning of the fuel or an explosion) is significantly reduced.

Furthermore, the inert gas separator can continuously generate nitrogen during operation of the fuel cell and, hence, at a time that fuel is conducted through the inner pipe. Thus, a continuous flow of nitrogen through the outer pipe (shroud) can be achieved when needed. This flow of nitrogen is venting or transporting any fuel leaking or permeating out of the inner (fuel) pipe outboard of the fuel distribution, i.e., away from the fuel cell system. Thus, there is no need for a fuel detection system.

In an implementation variant, the fuel cell system can further comprise at least one valve configured to close the outer pipe. This allows enclosing and holding the nitrogen in the outer pipe. For instance, if the fuel cell is not operating, the nitrogen can be kept in the outer pipe until the fuel cell will operate again. This avoids any manual work, when the fuel cell is not operating, such as manually venting and refilling nitrogen in a shroud.

As a mere example, a first valve may be arranged at an outlet of the outer pipe. This allows closing the outer pipe with respect to a venting environment. Alternatively or additionally, a second valve may be arranged at an inlet of the outer pipe. This ensures that the nitrogen in the outer pipe can be enclosed securely. The second valve can likewise be arranged at or in the inert gas separator or the fuel cell.

In another implementation variant, the fuel cell system can comprise an inert gas venting pipe releasing the nitrogen from the outer pipe. Such inerting gas venting pipe can fluidly connect the outer pipe with a venting environment, such as the ambient air. It is to be understood that the inert gas venting pipe may also have a short length or no length at all, such as an outlet of the outer pipe directly opening into the venting environment.

In a further implementation variant, the fuel cell system can further comprise a bypass pipe fluidly connecting the gas outlet of the fuel cell or the inert gas separator with a venting environment and bypassing the outer pipe. This allows operating the fuel cell in a usual manner, but diverting at least a portion of the exhaust gas stream of the fuel cell towards the outer pipe.

In yet a further implementation variant, the fuel cell system can further comprise a pressure variation detector configured to detect a pressure difference of the fuel in the fuel distribution pipe. Thus, a leakage of fuel from the fuel distribution pipe can be detected, for example, if the pressure decreases.

As a mere example, the pressure variation detector can be a pressure sensor in the inner pipe. If the pressure sensor indicates a pressure drop, a leakage of fuel from the fuel distribution pipe can be detected. Such pressure sensor may already be included in a conventional fuel cell system, for example, for sensing a fuel pressure at a fuel inlet of the fuel cell. Thus, an additional security measure can be implemented by observing whether a pressure drop occurs in the inner pipe.

Alternatively or additionally, the pressure variation detector can include a device surveying a performance of a fuel distribution, such as a fuel distribution pump, for example, at the fuel tank or anywhere in the fuel distribution pipe. If the fuel distribution pump performance varies, the pressure variation detector can be configured to detect a pressure drop indicating a fuel leakage from the fuel distribution pipe (i.e., downstream of the fuel distribution pump).

In another implementation variant, the fuel tank can store hydrogen. Hydrogen is a very volatility gas and can leak or permeate more easily from a fuel distribution pipe compared to other gases. Thus, the disclosed fuel cell system is particularly secure for hydrogen operated fuel cells.

According to a second aspect to better understand the present disclosure, an aircraft comprises at least one fuel cell system according to the first aspect or one of its variants. As a mere example, the aircraft may employ the fuel cell to generate electricity for operating certain control components of the aircraft.

In an implementation variant, the aircraft can further comprise an engine supplied with energy generated by the fuel cell. For example, the fuel cell can generate electricity, which is used to drive an electric motor propelling the aircraft or to drive an electric component of another type of aircraft engine.

The present disclosure is not restricted to the aspects and variants in the described form and order. Specifically, the description of aspects and variants is not to be understood as a specific limiting grouping of features. It is to be understood that the present disclosure also covers combinations of the aspects and variants. Thus, each variant or optional feature can be combined with any other aspect, variant, optional feature or even combinations thereof.

In the following, the present disclosure will further be described with reference to exemplary implementations illustrated in the figures, in which:
- Figure 1: schematically illustrates a fuel cell system; and
- Figure 2: schematically illustrates an aircraft having a fuel cell system.

In the following description, for purposes of explanation and not limitation, specific details are set forth in order to provide a thorough understanding of the present disclosure. It will be apparent to one skilled in the art that the present disclosure may be practiced in other implementations that depart from these specific details.

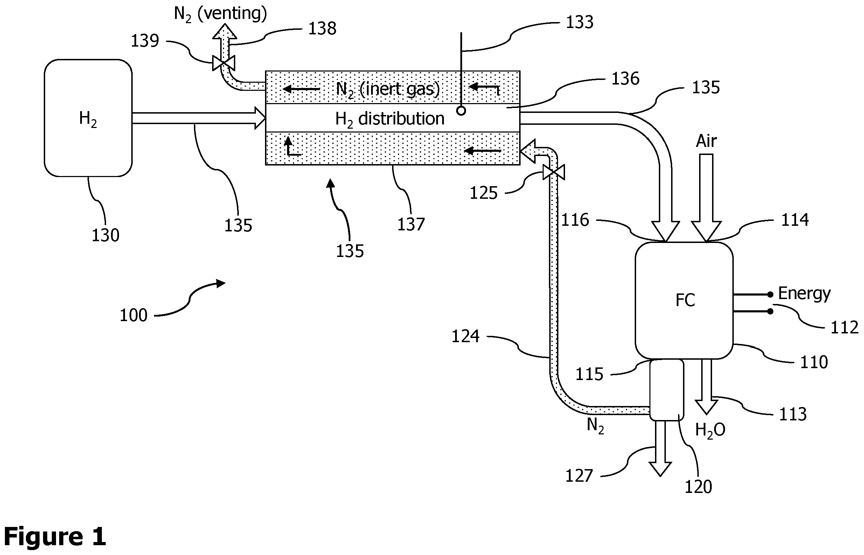

Figure 1 schematically illustrates a fuel cell system 100 comprising a fuel cell 110. The fuel cell 110 is configured to perform an electrochemical reaction, where fuel and an oxidiser react, such as hydrogen and oxygen, or methane, propane or other liquid or gaseous fuel reacting with oxygen from the oxidiser, and electric energy is generated and supplied by the fuel cell 110. For instance, the fuel cell 110 has an oxidiser inlet 114 (receiving air in the example of Figure 1) and a fuel inlet 116. Furthermore, the fuel cell 110 has an energy terminal 112. Optionally, the fuel cell 110 can have water outlet 113, as liquid water is collected in the fuel cell 110 and released through the outlet 113. It is to be understood that water developing in the fuel cell 110 may be released in form of vapour together with exhaust gas through a gas outlet 115.

Furthermore, the fuel cell system 100 comprises a fuel tank 130, such as the illustrated hydrogen tank 130. The fuel tank 130 is fluidly connected to the fuel cell 110, particularly the fuel inlet 116 of the fuel cell 110, via a fuel distribution pipe 135.

The fuel distribution pipe 135 comprises an inner pipe 136 fluidly connecting the fuel tank 130 with the fuel inlet 116 of the fuel cell 110. Furthermore, the fuel distribution pipe 135 comprises an outer pipe 137, such as a shroud, surrounding at least a portion of the fuel distribution pipe 135. In other words, the fuel from the fuel tank 130 is flowing through a shrouded pipe 135-137 to the fuel inlet 116 of the fuel cell 110. The outer pipe 137 forms an interior space between the inner pipe 135 and the shroud 137, where any fuel leaking or permeating through the inner (fuel distribution) pipe 135 can be collected and accumulated.

It is to be understood that the fuel distribution pipe 135 can extend from the fuel tank 130 to the fuel inlet 116 of the fuel cell 110 irrespective of its illustrated size, which is for explanation purposes only. Specifically, the outer pipe 137 may also extend from the fuel tank 130 to the fuel inlet 116, in order to cover/surround the entire inner pipe 136. The illustrated section of the fuel distribution pipe 135 having an inner pipe 136 and an outer pipe 137, hence, is to be contemplated as a magnification of this part of the fuel distribution pipe 135.

In addition, the fuel cell system 100 comprises an inert gas separator 120 fluidly connected to a gas outlet 115 of the fuel cell 110. The inert gas separator 120 is configured to separate nitrogen from a gas exiting the fuel cell 110. For instance, as oxygen is reacting with the fuel in the fuel cell 110, the exhaust gas (gas exiting the fuel cell 110 at outlet 115) has a reduced level of oxygen or is oxygen free. In case of air being fed to the fuel cell, such as through the oxidiser inlet 114, the exhaust gas at outlet 115 can mainly consist of nitrogen.

Thus, such inert exhaust gas can be conducted into the outer pipe 137. In addition, the inert gas separator 120 may operate with such exhaust gas and separate nitrogen therefrom, which is then conducted into the outer pipe 137. The remainder of the exhaust gas from the fuel cell 110 and/or the inert gas separator 120 can be released, for example, into the ambient environment or can be used in another component not falling under the scope of this disclosure.

When the fuel cell 110 operates, a continuous flow of exhaust gas and/or nitrogen through inert gas pipe 124 is available to vent and conduct through the outer pipe 137. If operation of the fuel cell 110 is stopped, it may be advantageous to maintain the nitrogen in the outer pipe 137. Therefore, the fuel cell system can comprise at least one valve 125, 139 configured to close the outer pipe 137. For example, valve 139 may be provided at or downstream of an outlet of the outer pipe 137. This outlet may be provided, for example, at or in an inert gas venting pipe 138 releasing the nitrogen from the outer pipe 137, such as into the ambient environment. Closing valve 139, hence, prevents the nitrogen in the outer pipe 137 from being released into the environment.

Venting nitrogen in the outer pipe 137 through the fuel cell 110, and/or the inert gas separator 120 is quite unlikely. Nevertheless, a second valve 125 can be provided in the inert gas pipe 124 or at an outlet of the inert gas separator 120 and/or at the gas outlet 115 of the fuel cell 110. Closing both valves 125, 139 allows enclosing the nitrogen in the outer pipe 137.

Furthermore, if the fuel cell 110 generates more exhaust gas at outlet 115 as is necessary for the nitrogen separation and conducting nitrogen throughout the pipe 137, the fuel cell system 100 can further comprise a bypass pipe 127 fluidly connecting the gas outlet 115 of the fuel cell 110 and/or the inert gas separator 120 with a venting environment. Thereby, the outer pipe 137 is bypassed.

In order to detect a leakage or fuel permeating from the fuel distribution pipe 135, a pressure sensor 133 can be provided, for example, at the fuel inlet 116 of the fuel cell 110 or in the inner pipe 136 as illustrated in Figure 1. Such pressure sensor 133 may be required anyway for the normal operation of the fuel cell 110, in order to provide a sufficient amount of fuel depending on the operating state of the fuel cell 110. In case the pressure sensor 133 indicates a pressure drop, fuel leakage from the fuel distribution pipe 135 is very likely. Thus, an operational stop of the fuel cell system 100 can be triggered by such pressure drop.

Furthermore, small portions of fuel leaked or permeated from the fuel distribution pipe 135, particularly the inner pipe 136, can be vented towards the ambient environment or any other secure place via the outer pipe 137 and the continuous stream of nitrogen therethrough. Since the inert gas separator 120 can continuously generate nitrogen that is guided through the shroud 137 and through the inert gas venting pipe 138, a continuous flow of nitrogen conveying any leaked or permeated fuel away from the fuel distribution pipe 135 can be achieved. This increases security of the fuel cell system 100.

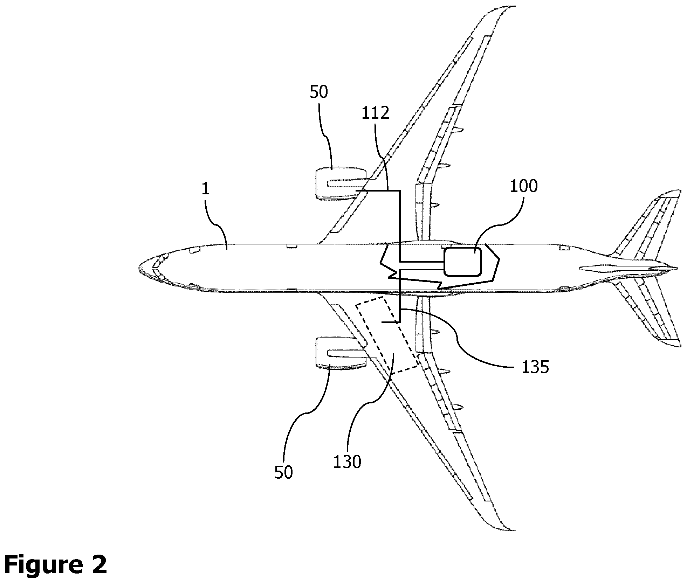

Figure 2 schematically illustrates an aircraft 1 comprising a fuel cell system 100, for example, the fuel cell system 100 of Figure 1. The aircraft 1 can comprise one or more engines 50 that are supplied with energy generated by the fuel cell 110.

Likewise, the aircraft 1 can comprise one or more fuel cell systems 100 and/or one or more fuel cells 110. As a mere example, a dedicated fuel cell system 100 and/or a dedicated fuel cell 110 can be associated with each engine 50 of the aircraft 1. Figure 2 illustrates only one engine 50 being connected with the fuel cell system 100 via a corresponding line for reasons of brevity, which line can represent an electric connection between the fuel cell terminal 112 and the engine 50. However, all engines 50 can be supplied with energy from the fuel cell 110 or each engine 50 can have its designated fuel cell system 100 and/or fuel cell 110. Such connection may be an electric cable electrically connecting the energy outlet 112 of the fuel cell 110 with the (respective) engine 50. It is to be understood that any other component(s) of the aircraft requiring electric power can be supplied with energy from the fuel cell 110.

Furthermore, the aircraft 1 can comprise a fuel tank 130 of the fuel cell system 100. The double-walled fuel distribution pipe 135 connects the fuel tank 130 with the fuel cell 110 as described with respect to Figure 1.

It is believed that the advantages of the technique presented herein will be fully understood from the foregoing description, and it will be apparent that various changes may be made in the form, constructions and arrangement of the exemplary aspects thereof without departing from the scope of the disclosure or without sacrificing all of its advantageous effects. Because the technique presented herein can be varied in many ways, it will be recognized that the disclosure should be limited only by the scope of the claims that follow.

## Claims

1. A fuel cell system (100), comprising:
a fuel cell (110);
a fuel tank (130);
a double-walled fuel distribution pipe (135) having an inner pipe (136) fluidly connecting the fuel tank (130) with a fuel inlet (116) of the fuel cell (110) and an outer pipe (137) surrounding at least a portion of the inner pipe (136);
an inert gas separator (120) fluidly connected to a gas outlet (115) of the fuel cell (110), and configured to separate nitrogen from a gas exiting the fuel cell (110); and
an inert gas pipe (124) conducting the nitrogen into the outer pipe (137).

2. The fuel cell system (100) of claim 1, further comprising:
at least one valve (125, 139) configured to close the outer pipe (137).

3. The fuel cell system (100) of claim 1 or 2, further comprising:
an inert gas venting pipe (138) releasing the nitrogen from the outer pipe (137).

4. The fuel cell system (100) of one of claims 1 to 3, further comprising:
a bypass pipe (127) fluidly connecting the gas outlet (115) of the fuel cell (110) and/or the inert gas separator (120) with a venting environment and bypassing the outer pipe (137).

5. The fuel cell system (100) of one of claims 1 to 4, further comprising:
a pressure variation detector (133) configured to detect a pressure difference of the fuel in the fuel distribution pipe (135).

6. An aircraft (1), comprising:
at least one fuel cell system (100) of one of claims 1 to 5.

7. The aircraft (1) of claim 6, further comprising:
an engine (50) supplied with energy generated by the fuel cell (110).
